# EUROPEAN PATENT APPLICATION

(11) **EP 4 751 954 A1**
(43) Date of publication of application: **03.06.2026**
(21) Application number: 24216315.2
(22) Date of filing: 28.11.2024
(51) Int. Cl.: B60K 1/04, B60L 50/64, H01M 50/244, H01M 50/249, H01M 50/262

(54) **BATTERY PACK RETENTION ARRANGEMENT**

(71) Applicant: Ford Global Technologies, LLC, Dearborn, MI 48126 (US)
(72) Inventor: JONES, Billy, Burnham on Crouch, CM0 8TX (GB); THOMAS, Ronnie, South Woodham Ferrers, CM3 5XZ (GB)
(74) Representative: HG Law International LLP

(57) **Abstract**

The present disclosure provides a retention arrangement for a battery pack, comprising a latch portion rotatably affixed to a tray portion of the battery pack and an engagement portion affixed to a battery array. The battery array is configured to be housed within the battery pack. The latch portion is rotatable with respect to the tray portion and configured to receive the engagement portion of the battery array. Relative movement of the engagement portion and the latch portion together causes rotation of the latch portion into a latched position in which the engagement portion is secured such that movement away from the battery pack is inhibited. The retention arrangement may include at least one retaining rail (120) for mounting the latch portion (150), and the engagement portion may comprise a protrusion (130) extending from the battery array (140).

## Description

### FIELD OF INVENTION

The present disclosure relates to battery pack retention arrangements, and more particularly to a battery pack retention arrangement, system, and method for securing battery arrays within a battery pack using pivotable latch portions engaged with protrusions on the battery arrays.

### BACKGROUND

Electrified vehicles, such as hybrid electric vehicles (HEVs), plug-in hybrid electric vehicles (PHEVs), and battery electric vehicles (BEVs), rely on high-voltage battery packs to power their electric drive systems. These battery packs typically contain multiple battery arrays, each comprising numerous individual battery cells. It is desirable to restrict movement of a battery array in a battery pack during vehicle operation and to protect a battery components from damage.

Conventional battery pack designs often utilize rigid mounting brackets or frames to secure the battery arrays in place. These mounting systems may involve bolting or welding components directly to the battery pack structure. While effective in restraining the battery arrays, such rigid mounting methods can make battery array installation, removal, and replacement challenging and time-consuming. Additionally, it is desirable to reduce vibration and shock loads transmitted to the battery cells.

Another approach involves using removable retention clips or fasteners to secure the battery arrays. However, these small components can be difficult to manipulate during assembly, e.g., in the confined spaces of a battery pack.

### SUMMARY OF INVENTION

This Summary is provided to introduce a selection of concepts in a simplified form that are further described below in the Detailed Description.

In a first aspect, a retention arrangement for a battery pack is provided. The retention arrangement includes a latch portion rotatably affixed to a tray portion of the battery pack and an engagement portion affixed to a battery array, the battery array configured to be housed within the battery pack. The latch portion is rotatable with respect to the tray portion and configured to receive the engagement portion of the battery array, such that relative movement of the engagement portion and the latch portion together causes rotation of the latch portion into a latched position in which the engagement portion is secured such that movement away from the battery pack is inhibited.

This retention arrangement provides a secure and efficient mechanism for retaining a battery array within a battery pack, allowing for easy installation and removal while ensuring the battery array remains firmly in place during operation.

The tray portion may include at least one retaining rail for mounting at least one latch portion.

The inclusion of retaining rails provides additional structural support and guidance for the latch portions, enhancing the overall stability and reliability of the retention arrangement.

The tray portion may include at least two retaining rails.

Utilizing multiple retaining rails further enhances the distribution of forces and increases the robustness of the retention system.

The at least two retaining rails may comprise two retaining rails which are parallel to one another and spaced apart from each other by a width sufficient to accommodate a battery array.

This configuration ensures proper alignment and support for the battery array, facilitating smooth insertion and removal while maintaining a secure fit.

At least two latch portions may be provided on the at least two retaining rails.

Multiple latch portions increase the retention strength and provide redundancy, enhancing the reliability of the battery pack.

The at least two latch portions may be provided on respective opposing retaining rails.

Positioning latch portions on opposing rails ensures a balanced and secure retention of the battery array from multiple sides.

The or each latch portion may be accommodated in a recess in the respective retaining rail.

Recessing the latch portions within the retaining rails provides a streamlined design, reducing protrusions and potential snag points while protecting the latch mechanism.

The battery array may include at least two engagement portions.

Multiple engagement portions on the battery array correspond to the multiple latch portions, ensuring a secure and balanced connection between the battery array and the tray portion.

The at least two engagement portions of the battery array may be provided on respective opposing sides of the battery array.

This arrangement allows for symmetrical and balanced engagement with the latch portions, enhancing stability and ease of installation.

The at least two engagement portions of the battery array may comprise two engagement portions of the battery array which are a first engagement portion on a first side of the battery array and a second engagement portion on a second side of the battery array, and wherein the first and second engagement portions lie substantially opposite one another and are in axial alignment.

Axially aligned engagement portions ensure proper orientation and even distribution of retention forces, enhancing the overall stability of the battery array within the pack.

The engagement portion may comprise a cylindrical protrusion extending outwardly from the battery array and substantially perpendicular to the battery array.

A cylindrical protrusion provides a robust and simple engagement point that can easily interface with the rotatable latch portion.

The latch portion may be substantially c-shaped and planar and includes a portion which, when the latch portion is in the latched position, at least partially surrounds the engagement portion to prevent movement of the latch portion with respect to the engagement portion.

This c-shaped design allows the latch portion to securely wrap around the engagement portion, providing a positive lock that resists unintended disengagement.

The retention arrangement may comprise four latch portions and four engagement portions, wherein a first two latch portions are rotatably affixed to a first section of the tray portion of the battery pack and a second two latch portions are rotatably affixed to a second section of the tray portion of the battery pack, wherein the first and second two latch portions are spaced apart from one another and are each configured to receive and latch with the four engagement portions of the battery array.

This configuration with multiple latch and engagement points provides a highly secure and balanced retention system, ensuring the battery array remains firmly in place even under extreme conditions.

In a second aspect, a battery pack comprising the retention arrangement of the first aspect is provided.

Incorporating the retention arrangement into a battery pack results in a robust and reliable power source suitable for various applications.

In a third aspect, a vehicle comprising the battery pack of the second aspect is provided.

Utilizing the battery pack with the enhanced retention arrangement in a vehicle ensures a secure and stable power source, enhancing reliability in mobile applications.

### BRIEF DESCRIPTION OF FIGURES

Embodiments of the invention will be described, by way of example, with reference to the following drawings, in which:
FIG. 1 illustrates a top view of a battery pack showing a known retention arrangement, according to aspects of the present disclosure.
FIG. 2 illustrates a top view of a battery array including two battery modules, according to aspects of the present disclosure.
FIG. 3 illustrates a side orthogonal view of a battery array within a battery pack, according to aspects of the present disclosure.
FIG. 4 illustrates a side orthogonal view of a retention arrangement for a battery pack, according to aspects of the present disclosure.
FIG. 5 illustrates a side view outline of a vehicle with a battery pack, according to aspects of the present disclosure.

Common reference numerals are used throughout the figures to indicate similar features.

### DETAILED DESCRIPTION

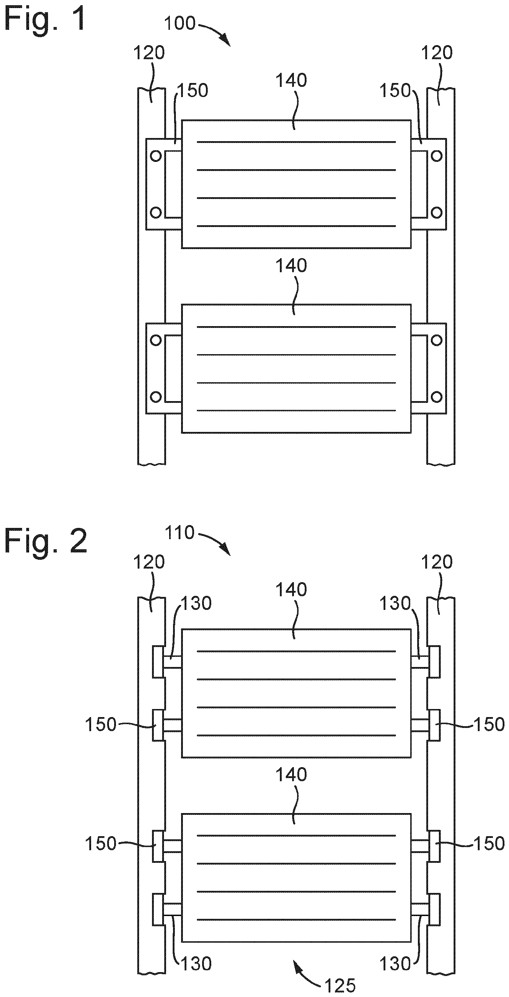

A battery pack 100 includes a retention arrangement for securing battery arrays 140. FIG. 1 illustrates a top view of the battery pack 100 showing a known retention arrangement. The battery pack 100 includes two parallel retaining rails 120 positioned on opposite sides of the battery pack 100. The retaining rails 120 extend vertically along the sides and are spaced apart to accommodate two battery arrays 140. Each battery array 140 is secured by latch portions 150, which are mounted to the retaining rails 120. The latch portions 150 are positioned at both ends of each battery array 140, with one latch portion 150 on each retaining rail 120.

A retention arrangement for a battery pack includes a latch portion rotatably affixed to a tray portion of the battery pack. The battery pack is configured to house a battery array. The battery array includes an engagement portion affixed to the battery array. The latch portion is rotatable with respect to the tray portion and is configured to receive the engagement portion of the battery array. Relative movement of the engagement portion and the latch portion together causes rotation of the latch portion into a latched position. In the latched position, the engagement portion is secured such that movement away from the battery pack is inhibited.

The retention arrangement provides a secure and efficient method for retaining battery arrays within a battery pack. A battery pack may comprise the retention arrangement described herein. Additionally, a vehicle may comprise a battery pack with the retention arrangement.

FIG. 2 illustrates a top view of a battery pack 110 including two battery arrays 140 positioned between parallel retaining rails 120. The battery pack 110 includes a tray portion 125 which includes at least one retaining rail 120 for mounting at least one latch portion 150. In the example shown in FIG. 2, the tray portion 125 includes two retaining rails 120 which are parallel to one another and spaced apart by a width sufficient to accommodate a battery array 140.

Each battery array 140 includes at least two engagement portions. The at least two engagement portions of the battery array 140 are provided on respective opposing sides of the battery array 140. In the example shown in FIG. 2, the at least two engagement portions of the battery array 140 comprise two engagement portions which are a first engagement portion on a first side of the battery array 140 and a second engagement portion on a second side of the battery array 140. The first and second engagement portions lie substantially opposite one another and are in axial alignment.

The engagement portions of the battery arrays 140 comprise protrusions 130 extending outwardly from the battery arrays 140. The protrusions 130 are cylindrical and extend substantially perpendicular to the battery arrays 140.

The retaining rails 120 each include multiple recesses into which the protrusions 130 of the battery arrays 140 fit. The recesses of the retaining rails 120 are configured to house latch portions 150, which are positioned at corresponding locations along each retaining rail 120. The latch portions 150 are positioned within the recesses of the retaining rails 120. There are multiple latch portions 150 arranged along each retaining rail 120, with pairs of latch portions 150 corresponding to each battery array 140.

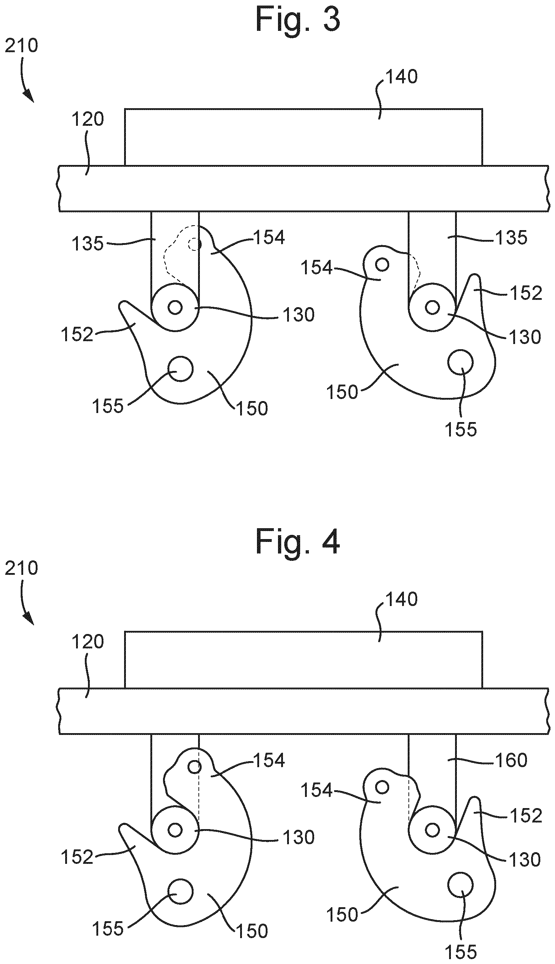

FIG. 3 illustrates a side orthogonal view of a battery array 140 within a battery pack 210. The battery pack 210 includes a retaining rail 120 and the battery array 140 having latch portions 150.

The battery array 140 includes protrusions 130 which extend outwardly from the battery array 140. The protrusions 130 are shaped to engage with the latch portions 150.

The battery pack 210 includes at least two latch portions 150 mounted on the retaining rail 120. In some examples, the battery pack 210 may include four latch portions 150 and four corresponding protrusions 130. Each latch portion 150 features a curved section 152 that forms a C-shaped structure. The curved section 152 is configured to partially surround and engage with a protrusion 130 of the battery array 140.

A retention portion 154 extends from each curved section 152. The retention portion 154 is configured to lock over and retain the protrusion 130. The latch portions 150 are rotatably mounted to the retaining rail 120 via pivots 155. The pivots 155 are located at the bottom of each latch portion 150.

An alignment portion 135 is attached to the retaining rail 120. The alignment portion 135 provides support and a connection point for the latch portions 150.

In some examples, at least two latch portions 150 may be provided on respective opposing retaining rails 120. A first two latch portions 150 may be rotatably affixed to a first section of the tray portion 125 of the battery pack 210, and a second two latch portions 150 may be rotatably affixed to a second section of the tray portion 125. The first and second two latch portions 150 may be spaced apart from one another.

The arrangement allows for the protrusions 130 of the battery array 140 to be secured within the curved sections 152 of the latch portions 150. The latch portions 150 can rotate around their respective pivots 155 to engage or disengage the protrusions 130.

FIG. 4 illustrates a side orthogonal view of a retention arrangement for the battery pack 210. The figure shows components of the retention system, including the retaining rail 120, the battery array 140, and two latch portions 150.

Each latch portion 150 is substantially c-shaped and planar, featuring a curved section 152 that partially encircles a protrusion 130 extending from the battery array 140. The curved section 152 is designed to engage with the protrusion 130, securing the battery array 140 in place.

Extending from each curved section 152 is the retention portion 154. The retention portion 154 is configured to lock over and retain the protrusion 130 when the latch portion 150 is in a latched position. In this latched position, the curved section 152 and retention portion 154 together at least partially surround the protrusion 130, preventing movement of the latch portion 150 with respect to the protrusion 130.

At the bottom of each latch portion 150, a pivot 155 is present. The pivot 155 allows the latch portion 150 to rotate, facilitating engagement and disengagement with the protrusion 130 of the battery array 140.

The battery pack 210 includes a recess 160 in the retaining rail 120 to accommodate the latch portion 150. The recess 160 is configured to house the latch portion 150, allowing for a compact and secure arrangement. Each latch portion 150 is accommodated in a recess 160 in the respective retaining rail 120.

The arrangement demonstrates how the latch portions 150 can secure the battery array 140 to the retaining rail 120 through a rotational mechanism. As the protrusion 130 of the battery array 140 is inserted, the latch portion 150 rotates around the pivot 155. This rotation brings the curved section 152 into engagement with the protrusion 130, while the retention portion 154 locks over the protrusion 130, securing the battery array 140 in place.

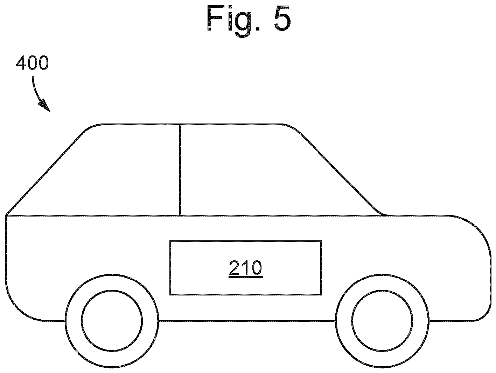

FIG. 5 illustrates a side view outline of a vehicle 400. The vehicle 400 includes a battery pack 210 integrated into the vehicle's body.

The battery pack 210 is positioned in the middle of the vehicle 400, typically beneath the passenger compartment. This central location provides several advantages for the overall vehicle design. The low, central positioning of the battery pack 210 contributes to a lower center of gravity for the vehicle 400, which may enhance stability and handling characteristics.

The integration of the battery pack 210 within the vehicle 400 utilizes the retention arrangement described earlier. The battery pack 210 includes the tray portion, retaining rails, and latch portions, which securely hold the battery arrays in place. This secure mounting maintains the integrity of the battery pack 210 during vehicle operation, especially considering the dynamic forces experienced during acceleration, braking, and cornering.

The positioning of the battery pack 210 in the vehicle 400 may also be designed to provide protection in the event of a collision. The vehicle's structure may be engineered to shield the battery pack 210 from impact forces, helping to maintain the integrity of the battery system.

The integration of the battery pack 210 in the vehicle 400 may also consider thermal management. The vehicle 400 may include cooling systems designed to maintain the battery pack 210 within an optimal temperature range during operation and charging.

The retention arrangement of the battery pack 210, including the retaining rails, latch portions, and protrusions of the battery arrays, ensures that the battery pack 210 remains securely fastened to the vehicle 400 throughout its operational life. This secure integration is essential for maintaining the electrical connections between the battery pack 210 and the vehicle's power systems, as well as ensuring consistent performance of the electric drivetrain.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A retention arrangement for a battery pack, the retention arrangement comprising a latch portion rotatably affixed a tray portion of the battery pack and an engagement portion affixed to a battery array, the battery array configured to be housed within the battery pack, and wherein the latch portion is rotatable with respect to the tray portion and configured to receive the engagement portion of the battery array, such that relative movement of the engagement portion and the latch portion together causes rotation of the latch portion into a latched position in which the engagement portion is secured such that movement away from the battery pack is inhibited.

2. The retention arrangement of claim 1 wherein the tray portion includes at least one retaining rail for mounting at least one latch portion.

3. The retention arrangement of claim 2, wherein the tray portion includes at least two retaining rails.

4. The retention arrangement of claim 3, wherein the at least two retaining rails comprise two retaining rails which are parallel to one another and spaced apart from each other by a width sufficient to accommodate a battery array.

5. The retention arrangement of any one of claims 2-4, wherein at least two latch portions are provided on the at least two retaining rails and wherein the at least two latch portions.

6. The retention arrangement of claim 5, wherein the at least two latch portions are provided on respective opposing retaining rails.

7. The retention arrangement of any one of claims 2-6, wherein the or each latch portion is accommodated in a recess in the respective retaining rail.

8. The retention arrangement of any preceding claim, wherein the battery array includes at least two engagement portions.

9. The retention arrangement of claim 8, wherein the at least two engagement portions of the battery array are provided on respective opposing sides of the battery array.

10. The retention arrangement of claim 9, wherein the at least two engagement portions of the battery array comprise two engagement portions of the battery array which are a first engagement portion on a first side of the battery array and a second engagement portion on a second side of the battery array, and wherein the first and second engagement portions lie substantially opposite one another and are in axial alignment.

11. The retention arrangement of any preceding claim, wherein the engagement portion comprises a cylindrical protrusion extending outwardly from the battery array and substantially perpendicular to the battery array.

12. The retention arrangement of any preceding claim, wherein the latch portion is substantially c-shaped and planar and includes a portion which, when the latch portion is in the latched position, at least partially surrounds the engagement portion to prevent movement of the latch portion with respect to the engagement portion.

13. The retention arrangement of any preceding claim, comprising four latch portions and four engagement portions, wherein a first two latch portions are rotatably affixed to a first section of the tray portion of the battery pack and a second two latch portions are rotatably affixed to a second section of the tray portion of the battery pack, wherein the first and second two latch portions are spaced apart from one another and are each configured to receive and latch with the four engagement portions of the battery array.

14. A battery pack comprising the retention arrangement of any preceding claim.

15. A vehicle comprising the battery pack of claim 14.
